# EUROPÄISCHE PATENTSCHRIFT

(11) **EP 0 470 218 B1**
(45) Veröffentlichungstag und Bekanntmachung des Hinweises auf die Patenterteilung: **18.09.1996**
(21) Anmeldenummer: 91903638.4
(22) Anmeldetag: 28.01.1991
(51) Int. Cl.: C09K 19/42, C09K 19/44, C09K 19/46

(54) **FLÜSSIGKRISTALLINES GEMISCH MIT NIEDRIGER VISKOSITÄT**
LOW VISCOSITY LIQUID CRYSTAL MIXTURE
MELANGE DE CRISTAUX LIQUIDES A FAIBLE VISCOSITE

(30) Priorität: 13.02.1990 DE 4004269; 20.02.1990 DE 4005237; 20.02.1990 DE 4005238; 20.02.1990 DE 4005239
(43) Veröffentlichungstag der Anmeldung: 12.02.1992
(73) Patentinhaber: MERCK PATENT GmbH, D-64271 Darmstadt (DE)
(72) Erfinder: HITTICH, Reinhard, D-6101 Modautal 1 (DE); PLACH, Herbert, D-6100 Darmstadt (DE); REIFFENRATH, Volker, D-6101 Rossdorf (DE)
(86) Internationale Anmeldenummer: EP9100156
(87) Internationale Veröffentlichungsnummer: WO9112294

(56) Entgegenhaltungen:
- EP-A- 0 306 917
- WO-A-86/03769
- Patent Abstracts of Japan, Band 7, Nr. 97 (C-163)(1242), 23. April 1983; & JP-A-5823875 (HITACHI), 12. Februar 1983

## Beschreibung

Die vorliegende Erfindung betrifft ein flüssigkristallines Gemisch mit niedriger Viskosität und dessen Verwendung für elektrooptische Zwecke.

Flüssige Kristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("supertwisted nematic"), SBE-Zellen ("super-birefringence effect") und OMI-Zellen ("optical mode interference"). Die gebräuchlichsten An- zeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung, insbesondere im sichtbaren und ultravioletten Spektralbereich, besitzen. Ferner sollten die Flüssigkristallmaterialien niedere Viskosität aufweisen und in den Zellen kurze Ansprechzeiten, tiefe Schwellenspannungen und einen hohen Kontrast ergeben. Weiterhin sollten sie bei üblichen Betriebstemperaturen, d.h. in der Regel in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine möglichst geringe elektrische Leitfähigkeit aufweisen.

Für mit niedrigen Multiplexverhältnissen angesteuerte (common use) Anzeigevorrichtungen, die bevorzugter Gegenstand der vorliegenden Erfindung sind, sind nematische Gemische mit Klärpunktion oberhalb 55° (vorzugsweise oberhalb 65°), einer Doppelbrechung im Bereich von 0,04 bis 0,33 (vorzugsweise 0,07 bis 0,23) und einer dielektrischen Anisotropie im Bereich von 1,5 bis 39 (vorzugsweise 4 bis 19) erwünscht.

Eine bekannte Mischung aus dem Stand der Technik ist E7 (BDH, Poole, Great Britain), welche Cyanobiphenyle enthält und folgende Parameter aufweist:
- T_{N,I}: = 60,5°
- Δn: = 0,225
- η₂₀: = 39 cSt
- V₁₀ (TN): = 1,5 Volt

Für viele Anwendungen weisen derartige Gemische jedoch eine unerwünschte hohe Viskosität und/oder eine zu niedrige dielektrische Anisotropie auf, was zu unerwünscht langen Schaltzeiten bzw. zu zu hohen Schwellspannungen führt.

Ähnliche Gemische mit Fluorphenylestern sind aus EP-A-0 306 917 und JP-A-5 823 875 bekannt.

Die Erfindung betrifft ein flüssigkristallines Gemisch enthaltend eine oder mehrere Verbindungen der allgemeinen Formel 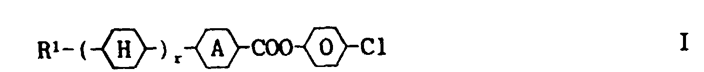 worin R¹ geradkettiges Alkyl mit 2 bis 12 C-Atomen, worin auch eine CH₂-Gruppe durch -O- oder -CH=CH- ersetzt sein kann, Ring A 1,4-Phenylen oder trans-1,4-Cyclohexylen und r 0 oder 1 bedeudet,

Es wurde gefunden, daß bereits ein relativ geringer Anteil an Verbindungen der Formel I im Gemisch mit einer oder mehreren Verbindungen der Formel II, III bzw. IV zu einer beträchtlichen Verbesserung der Ansprechzeiten und zu niedrigen Schwellenspannungen führt. Die Verbindungen der Formel II besitzen eine hohe optische Anisotropie. Die optische Anisotropie des Gemisches wird jedoch im angegebenen Mischungsbereich durch die Verbindungen der Formel II nur relativ wenig erhöht, während die Schwellenspannung deutlich verbessert wird. Höhere Mengen an Verbindung der Formel II ergeben im allgemeinen nur noch eine geringfügige Verbesserung der Schwellenspannung, aber eine vergleichsweise starke Erhöhung der Viskosität. Die Erfindung ermöglicht somit Flüssigkristallgemische mit niedriger Viskosität und kurzen Schaltzeiten.

Durch Zusatz von Verbindung der Formel II wird ferner häufig der Schmelzpunkt des Gemisches gesenkt. Die Verbindungen der Formel I und II sind farblos, stabil und untereinander und mit anderen Flüssigkristallkomponenten gut mischbar.

Die Verbindungen der Formel III besitzen eine niedrige optische Anisotropie. Die optische Anisotropie des Gemisches wird jedoch im angegebenen Mischungsbereich durch die Verbindungen der Formel III nur relativ wenig erniedrigt, während die Schwellenspannung deutlich verbessert wird. Höhere Mengen an Verbindung der Formel III ergeben im allgemeinen nur noch eine geringfügige Verbesserung der Schwellenspannung. Die Erfindung ermöglicht somit Flüssigkristallgemische mit niedriger Viskosität und kurzen Schaltzeiten.

Durch Zusatz von Verbindung der Formel III wird ferner häufig der Schmelzpunkt des Gemisches gesenkt. Die Verbindungen der Formel I und III sind farblos, stabil und untereinander und mit anderen Flüssigkristallkomponenten gut mischbar.

Die Verbindungen der Formel IV besitzen eine hohe dielektrische Anisotropie. Die optische Anisotropie des Gemisches wird im angegebenen Mischungsbereich durch die Verbindungen der Formel IV nur relativ wenig verändert, während die Schwellenspannung deutlich verbessert wird. Höhere Mengen an Verbindung der Formel IV ergeben im allgemeinen nur noch eine geringfügige Verbesserung der Schwellenspannung, aber eine vergleichsweise starke Erhöhung der Viskosität. Die Erfindung ermöglicht somit Flüssigkristallgemische mit niedriger Viskosität und kurzen Schaltzeiten.

Durch Zusatz von Verbindung der Formel IV wird ferner häufig der Schmelzpunkt des Gemisches gesenkt. Die Verbindungen der Formel I und IV sind farblos, stabil und untereinander und mit anderen Flüssigkristallkomponenten gut mischbar.

Der Ausdruck geradkettiges Alkyl mit 2 bis 12 C-Atomen umfaßt die geradkettigen Gruppen Ethyl, Propyl, Butyl, Pentyl, Hexyl, Heptyl, Octyl, Nonyl, Decyl, Undecyl und Dodecyl. Gruppen mit 2-7 Kohlenstoffatomen sind im allgemeinen bevorzugt.

Bevorzugte Reste R¹ bzw. R² worin in den Alkylethern eine CH₂-Gruppe durch -0- oder -CH=CH- ersetzt ist, sind im folgenden angegeben:

Alkoxygruppen mit 1-12 Kohlenstoffatomen, insbesondere die geradkettigen Gruppen Methoxy, Ethoxy, Propyloxy, Butyloxy, Pentyloxy, Hexyloxy, Heptyloxy, Octyloxy, Nonyloxy und Decyloxy. Gruppen mit 1-7 Kohlenstoffatomen sind im allgemeinen bevorzugt.

Alkenylgruppen mit 2-12 Kohlenstoffatomen, insbesondere die geradkettigen Gruppen C₈-C₁₂-7-Alkenyl, insbesondere C₄-C₁₂-3E-A-Alkenjyl, C₅-C₁₂-4-Alkenyl, C₆-C₁₂-5-Alkenyl, C₇-C₁₂-6-Alkenyl und C₅-C₁₂-7-Alkenyl, insbesondere C₂-C₁₂-1E-Alkenyl, C₄-C₁₂-3E-Alkenyl und C₅-C₁₂-4-Alkenyl. Beispiele bevorzugter Alkenylgruppen sind Vinyl, 1E-Pro~ penyl, 1E-Butenyl, 1E-Pentenyl, 1E-Hexenyl, 1E-Heptenyl, 1E-Octenyl, 1E-Nonenyl, 3-Butenyl, 3E-Pentenyl, 3E-Hexenyl, 3E-Octenyl, 3E-Nonenyl, 4-Pentenyl, 4Z-Hexenyl, 4E-Hexenyl, 4Z-Heptenyl, 4Z-Octenyl, 4Z-Nonenyl, 5-Hexenyl, 6-Heptenyl, 7-Octenyl und dergleichen. Gruppen mit bis zu 7 Kohlenstoffatomen sind im allgemeinen bevorzugt.

Die Verbindungen der Formeln I und II sind bekannte oder Analoge bekannter Verbindungen. Geeignete Methoden zur Herstellung dieser Verbindungen sind dem Fachmann bekannt.

Formel I umfaßt die schwach polaren Verbindungen der allgemeinen Formeln 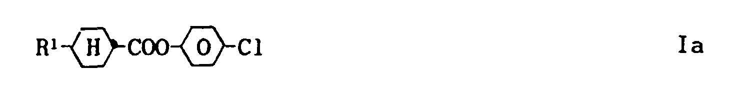 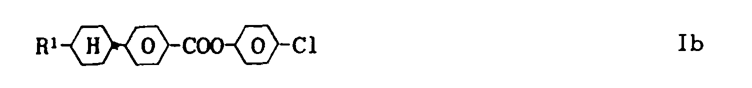 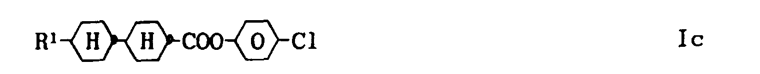 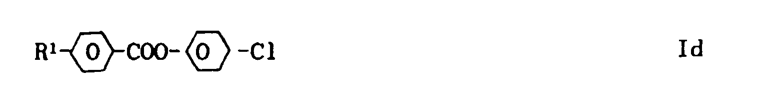 worunter Ia, Ib und Ic besonders bevorzugt sind.

Formel II umfaßt die stark polaren Verbindungen der Formeln 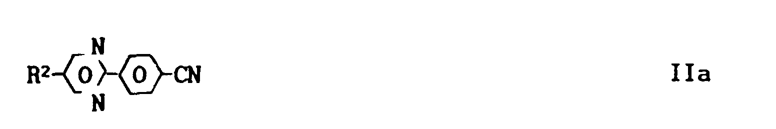 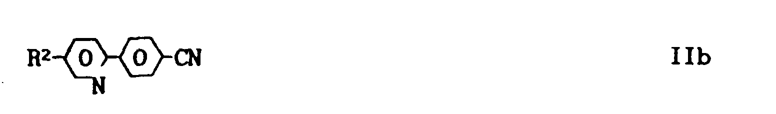 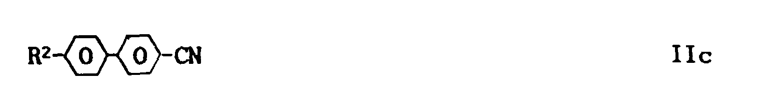 worunter IIa und IIb zur Erzielung besonders niedriger Schwellenspannungen und IIc für Gemische mit besonders hoher Stabilität besonders bevorzugt sind.

Durch geeignete Wahl der Bedeutungen von R¹, R², r, X, Y und Ring A können die Ansprechzeiten, die Schwellenspannung, die Steilheit der Transmissionskennlinien, etc. in gewünschter Weise modifiziert. Beispielsweise führen 1E-Alkenylreste, 3E-Alkenylreste und dergleichen in der Regel zu kürzeren Ansprechzeiten, verbesserten nematischen Phasenbereichen und einem höheren Verhältnis der elastischen Konstanten k₃₃ (bend) und k₁₁ (splay) im Vergleich zu Alkyl- bzw. Alkoxyresten. 4-Alkenylreste, 3-Alkenyloxyreste und dergleichen ergeben im allgemeinen tiefere Schwellenspannungen und kleinere Werte von k₃₃/k₁₁ im Vergleich zu Alkyl- und Alkoxyresten.

Das optimale Mengenverhältnis der Verbindungen der Formel I und II hängt weitgehend von den gewünschten Eigenschaften, von der Wahl der Komponenten der Formel I und II und von der Wahl weiterer gegebenenfalls vorhandener Komponenten ab. Geeignete Mengenverhältnisse innerhalb des oben angegebenen Bereichs können von Fall zu Fall leicht ermittelt werden. Im allgemeinen ist ein Verhältnis des Gesamtgewichtes an Verbindungen der Formel I zum Gesamtgewicht an Verbindungen der Formel II von etwa 3:1 bis 10:1 bevorzugt.

Die Gesamtmenge an Verbindungen der Formel I und II in den erfindungsgemäßen Gemischen ist nicht kritisch. Die Gemische können daher eine oder mehrere weitere Komponenten enthalten, zwecks Optimierung verschiedener Eigenschaften. Der beobachtete Effekt auf die Ansprechzeiten und die Schwellenspannung ist jedoch in der Regel umso gröBer je höher die Gesamtkonzentration an Verbindungen der Formel I und II ist.

Bevorzugte erfindungsgemäße Gemische sind daher diejenigen, worin der Anteil an Verbindungen der Formeln I und II zusammen im Gesamtgemisch mindestens 50 Gew.-% beträgt, und insbesondere diejenigen, worin der Anteil an Verbindungen der Formel I und II zusammen mindestens 65 Gew.-% beträgt. Es versteht sich, daß der Anteil auch bis zu 100 Gew.-% betragen kann.

Bevorzugte Konzentrationsbereiche für die Verbindungen der Formel I bzw. II ergeben sich aus den angegebenen Gewichtsverhältnissen und den bevorzugten Gesamtmengen. Besonders bevorzugt sind Gemische, in denen der Anteil an einer oder mehreren Verbindungen der Formel II im Gesamtgemisch 10-40 Gew.-%, insbesondere 10-30 Gew.-% beträgt. Weiterhin sind diejenigen Gemische besonders bevorzugt, in denen der Anteil an einer oder mehreren Verbindungen der Formel I im Gesamtgemisch mindestens 15 Gew.-%, insbesondere mindestens 30 Gew.-% beträgt.

Formel III umfaßt die stark polaren Verbindungen der Formeln 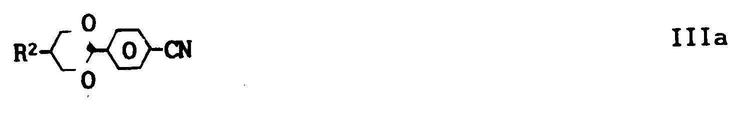 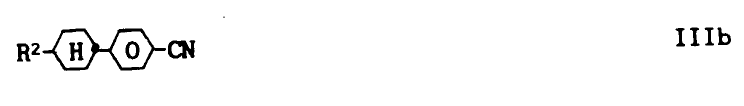 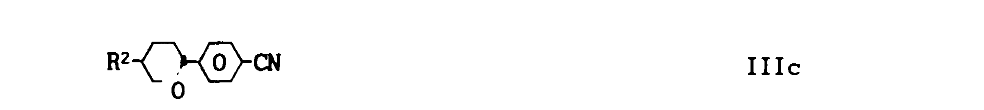 worunter IIIa und IIIb besonders bevorzugt sind.

Durch geeignete Wahl der Bedeutungen von R¹, R², r, X, Y und Ring A können die Ansprechzeiten, die Schwellenspannung, die Steilheit der Transmissionskennlinien, etc. in gewünschter Weise modifiziert. Beispielsweise führen lE-Alkenylreste, 3E-Alkenylreste und dergleichen in der Regel zu kürzeren Ansprechzeiten, verbesserten nematischen Phasenbereichen und einem höheren Verhältnis der elastischen Konstanten k₃₃ (bend) und K₁₁ (splay) im Vergleich zu Alkyl- bzw. Alkoxyresten. 4-Alkenylreste, 3-Alkenyloxyreste und dergleichen ergeben im allgemeinen tiefere Schwellenspannungen und kleinere Werte von k₃₃/k₁₁ im Vergleich zu Alkyl- und Alkoxyresten.

Das optimale Mengenverhältnis der Verbindungen der Formel I und III hängt weitgehend von den gewünschten Eigenschaften, von der Wahl der Komponenten der Formel I und III und von der Wahl weiterer gegebenenfalls vorhandener Komponenten ab. Geeignete Mengenverhältnisse innerhalb des oben angegebenen Bereichs können von Fall zu Fall leicht ermittelt werden. Im allgemeinen ist ein Verhältnis des Gesamtgewichtes an Verbindungen der Formel I zum Gesamtgewicht an Verbindungen der Formel III von etwa 3:1 bis 10:1 bevorzugt.

Die Gesamtmenge an Verbindungen der Formel I und III in den erfindungsgemäßen Gemischen ist nicht kritisch. Die Gemische können daher eine oder mehrere weitere Komponenten enthalten, zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formel I und III ist.

Bevorzugte erfindungsgemäße Gemische sind daher diejenigen, worin der Anteil an Verbindungen der Formeln I und III zusammen im Gesamtgemisch mindestens 50 Gew.-% beträgt, und insbesondere diejenigen, worin der Anteil an Verbindungen der Formel I und III zusammen mindestens 65 Gew.-% beträgt. Es versteht sich, daß der Anteil auch bis zu 100 Gew.-% betragen kann.

Bevorzugte Konzentrationsbereiche für die Verbindungen der Formel I bzw. III ergeben sich aus den angegebenen Gewichtsverhältnissen und den bevorzugten Gesamtmengen. Besonders bevorzugt sind Gemische, in denen der Anteil an einer oder mehreren Verbindungen der Formel III im Gesamtgemisch 10-40 Gew.-%, insbesondere 10-30 Gew.-% beträgt. Weiterhin sind diejenigen Gemische besonders bevorzugt, in denen der Anteil an einer oder mehreren Verbindungen der Formel I im Gesamtgemisch mindestens 15 Gew.-%, insbesondere mindestens 30 Gew.-% beträgt.

Formel IV umfaßt die stark polaren Verbindungen der Formeln 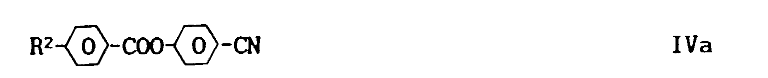 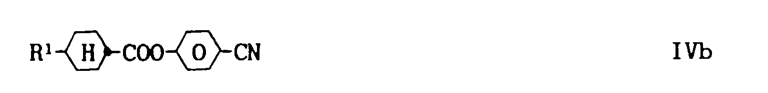 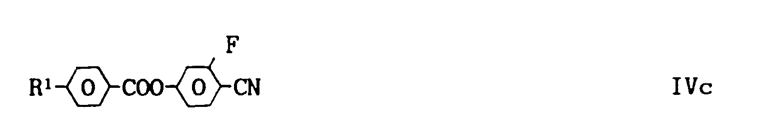 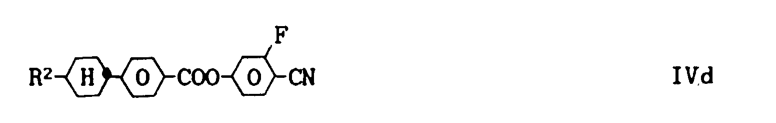 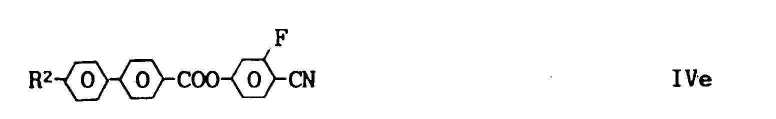 worunter IVa, IVc und IVd, insbesondere IVa und IVc, besonders bevorzugt sind.

Durch geeignete Wahl der Bedeutungen von R¹, R², r, X, Y und Ring A können die Ansprechzeiten, die Schwellenspannung, die Steilheit der Transmissionskennlinien, etc. in gewünschter Weise modifiziert. Beispielsweise führen lE-Alkenylreste, 3E-Alkenylreste und dergleichen in der Regel zu kürzeren Ansprechzeiten, verbesserten nematischen Phasenbereichen und einem höheren Verhältnis der elastischen Konstanten k₃₃ (bend) und k₁₁ (splay) im Vergleich zu Alkyl- bzw. Alkoxyresten. 4-Alkenylreste, 3-Alkenyloxyreste und dergleichen ergeben im allgemeinen tiefere Schwellenspannungen und kleinere Werte von k₃₃/k₁₁ im Vergleich zu Alkyl- und Alkoxyresten.

Das optimale Mengenverhältnis der Verbindungen der Formel I und IV hängt weitgehend von den gewünschten Eigenschaften, von der Wahl der Komponenten der Formel I und IV und von der Wahl weiterer gegebenenfalls vorhandener Komponenten ab. Geeignete Mengenverhältnisse innerhalb des oben angegebenen Bereichs können von Fall zu Fall leicht ermittelt werden. Im allgemeinen ist ein Verhältnis des Gesamtgewichtes an Verbindungen der Formel I zum Gesamtgewicht an Verbindungen der Formel IV von etwa 3:1 bis 10:1 bevorzugt.

Die Gesamtmenge an Verbindungen der Formel I und IV in den erfindungsgemäßen Gemischen ist nicht kritisch. Die Gemische können daher eine oder mehrere weitere Komponenten enthalten, zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formel I und IV ist.

Bevorzugte erfindungsgemäße Gemische sind daher diejenigen, worin der Anteil an Verbindungen der Formeln I und IV zusammen im Gesamtgemisch mindestens 50 Gew.-% beträgt, und insbesondere diejenigen, worin der Anteil an Verbindungen der Formel I und IV zusammen mindestens 65 Gew.-% beträgt. Es versteht sich, daß der Anteil auch bis zu 100 Gew.-% betragen kann.

Bevorzugte Konzentrationsbereiche für die Verbindungen der Formel I bzw. IV ergeben sich aus den angegebenen Gewichtsverhältnissen und den bevorzugten Gesamtmengen. Besonders bevorzugt sind Gemische, in denen der Anteil an einer oder mehreren Verbindungen der Formel IV im Gesamtgemisch 10-40 Gew.-%, insbesondere 10-30 Gew.-% beträgt. Weiterhin sind diejenigen Gemische besonders bevorzugt, in denen der Anteil an einer oder mehreren Verbindungen der Formel I im Gesamtgemisch mindestens 15 Gew.-%, insbesondere mindestens 30 Gew.-% beträgt.

Die erfindungsgemäBen Gemische enthalten vorzugsweise eine oder mehrere Verbindungen der Formel Ia. Die Gesamtmenge an Verbindungen der Formel Ia im Gemisch beträgt vorzugsweise mindestens 8 Gew.-%, besonders bevorzugt mindestens 15 Gew.-%.

Die erfindungsgemäßen Gemische können auch eine oder mehrere Verbindungen der Formel Ib und/oder Ic enthalten. Die Gesamtmenge an gegebenenfalls vorhandenen Verbindungen der Formel Ib und/oder Ic im Gemisch beträgt vorzugsweise mindestens 5 Gew.-%, besonders bevorzugt mindestens 10 Gew.-%. Enthält das erfindungs- gemäße Gemisch eine oder mehrere Verbindungen der Formel Ia und eine oder mehrere Verbindungen der Formel Ib und/oder Ic, so beträgt das Gewichtsverhältnis der Verbindungen der Formel Ia zu den Verbindungen der Formel Ib und/oder Ic, vorzugsweise mindestens 1:1.

Die erfindungsgemäßen Gemische eignen sich insbesondere für nematische und cholesterische Anwendungen. Das Gemisch der Verbindungen der Formeln I, II, III und/oder IV kann als solches verwendet oder mit weiteren, flüssigkristallinen und/oder nicht-flüssigkristallinen Komponenten gemischt werden. Geeignete weitere Komponenten sind dem Fachmann bekannt und zum Teil im Handel erhältlich, wie z.B. nematische oder nematogene (monotrope oder isotrope) Substanzen aus den Klassen der Azoxybenzole, Benzylidenaniline, Biphenyle, Terphenyle, Phenyl- oder Cyclohexylbenzoate, Cyclohexan-carbonsäurephenyl- oder cyclohexyl-ester, Phenyl- oder Cyclohexylester der Cyclohexylbenzoesäure, Phenyl- oder Cyclohexylester der Cyclohexancarbonsäure, Cyclohexylphenylester der Benzoesäure, der Cyclohexancarbonsäure bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexene, Cyclohexylcyclohexylcyclohexene, 1,4-Bis-cyclohexylbenzole, 4,4'-Bis-cyclohexylbiphenyle, Phenyl- oder Cyclohexylpyrimidine, Phenyl- oder Cyclohexylpyridine, Phenyl- oder Cylcohexyldioxane, Phenyl- oder Cyclohexyl-1,3-dithiane, 1,2-Diphenylethane, 1,2-Di-cyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile erfindungsgemäßer Medien in Frage kommenden Verbindungen lassen sich duch die Formeln 1, 2, 3, 4 und 5 charakterisieren:

R'-L-E-R" (1)

R'-L-COO-E-R" (2)

R'-L-OOC-E-R" (3)

R'-L-CH₂CH₂-E-R" (4)

R'-L-C=C-E-R" (5)

In den Formeln 1, 2, 3, 4 und 5 bedeuten L und E, die gleich oder verschieden sein können, jeweils unabhängig voneinander eine bivalenten Rest aus der aus -Phe-, -Cyc-, -Phe-Phe-, -Phe-Cyc-, -Cyc-Cyc-, -Pyr-, -Dio-, -G-Phe- und -G-Cyc-sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleich- zeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc- und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R" bedeuten in einer bevorzugten Untergruppe der Verbindungen der Formeln 1, 2, 3, 4 und 5 jeweils unabhängig voneinander Alkyl, Alkenyl, Alkoxy, Alkenyloxy oder Alkanoyloxy mit bis zu 8 Kohlenstoffatomen (Gruppe 1). Bei den meisten dieser Verbindungen sind R' und R" voneinander verschieden, wobei einer dieser Reste meist Alkyl oder Alkenyl ist. In einer weiteren bevorzugten Untergruppe der Verbindungen der Formeln 1, 2, 3, 4 und 5 bedeutet R" -CN, -CF₃, F, Cl oder -NCS; R hat dabei die bei den Verbindungen der Gruppe 1 angegebene Bedeutung und ist vorzugsweise Alkyl oder Alkenyl (Gruppe 2). Aber auch andere Varianten der vorgesehenen Substituenten in den Verbindungen der Formeln 1, 2, 3, 4 und 5 sind gebräuchlich. Viele solcher Substanzen oder auch Gemische davon sind im Handel erhältlich. Alle diese Substanzen sind nach literaturbekannten Methoden oder in Analogie dazu erhältlich.

Die erfindungsgemäßen Gemische enthalten vorzugsweise neben Komponenten aus der Gruppe 1 auch Komponenten aus der Gruppe 2, deren Anteile vorzugsweise wie folgt sind:
Gruppe 1: 20 bis 90 %, insbesondere 30 bis 90 %,
Gruppe 2: 10 bis 80 %, insbesondere 10 bis 50 %,
wobei die Summe der Anteile der Verbindungen der Formeln I, II, III und IV und der Verbindungen aus den Gruppen 1 und 2 bis zu 100 % ergeben.

Die erfindungsgemäßen Gemische enthalten vorzugsweise 1 bis 40 %, insbesondere vorzugsweise 5 bis 30 % an erfindungsgemäBen Verbindungen. Weiterhin bevorzugt sind Medien, enthaltend mehr als 40 %, insbesondere 45 bis 90 % an erfindungsgemäßen Verbindungen. Die Medien enthalten vorzugsweise drei, vier oder fünf erfindungsgemäße Verbindungen.

Die erfindungsgemäßen flüssigkristallinen Gemische enthalten vorzugsweise neben einer oder mehreren Verbindungen der Formeln I und II, III und/oder IV als weitere Bestandteile 2 bis 40, insbesondere 4 bis 30 Komponenten. Ganz besonders bevorzugt enthalten diese Gemische neben einer oder meheren Verbindungen der Formeln I und II, III und/oder IV 7 bis 25 Komponenten.

Die erfindungsgemäßen Gemische können gewünschtenfalls auch eine oder mehrere Verbindungen mit hoher optischer Anisotropie, beispielsweise aus der Gruppe der Verbindungen der allgemeinen Formeln 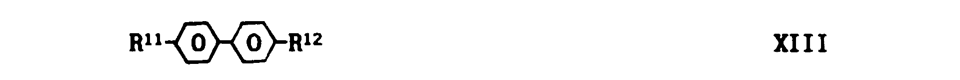 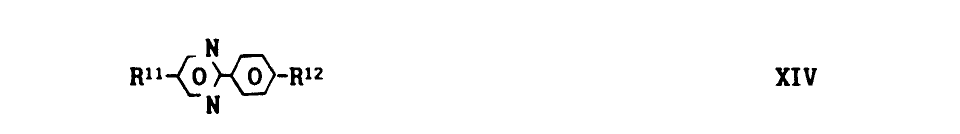 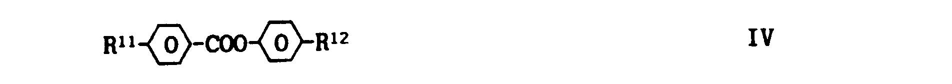 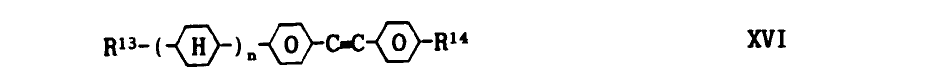 worin die Reste R¹¹ und R¹² unabhängig voneinander C₁-C₁₂-Alkyl, C₁-C₁₂-Alkoxy C₂-C₁₂-Alkenyl oder C₃-C₁₂-Alkenyloxy bezeichnen oder einer der Reste R¹¹ und R¹² auch Cyano bezeichnet: R¹³ C₁-C₁₂-Alkyl bedeutet; R¹⁴ C₁-C₁₂-Alkyl, C₁-C₁₂-Alkoxy, Cyano, Fluor oder Chlor darstellt; und n für die Zahl 0 oder 1 steht, enthalten. Der Anteil dieser Verbindungen sollte jedoch relativ niedrig sein, da sonst die optische Anisotropie des Gemisches zu stark erhöht wird.

Die erfindungsgemäßen Mischungen können auch eine oder mehrere optisch aktive Verbindungen enthalten. Beispiele geeigneter optisch aktiver Verbindungen sind die Cholesteryl-Derivate (z.B. Cholesterylchlorid oder Cholesterylchlorid oder Cholesterylnonanoat), und die optisch aktiven Verbindungen der Formeln III-XVI mit chiraler Seitenkette [z.B. optisch aktives 4-(2-methylbutyl oder 2-Methylbutyloxy)-4-biphenylcarbonitril]. Gewünachtenfalls können auch eine oder mehrere Verbindungen der Formel I und/oder II optisch aktive Verbindungen mit verzweigter, chiraler Seitenkette (z.B. 2-Methylbutyl oder 2-Methylbutyloxy) sein. Die erfindungsgemäßen Mischungen können ferner einen oder mehrere dichroitische Farbstoffe (z.B. Azo-, Azoxy- und/oder Anthrachinonfarbstoffe) enthalten. Der Anteil an optisch aktiven Verbindungen und/oder Farbstoffen wird durch die Löslichkeit, die gewünschte Ganghöhe, Farbe, Extinktion und dergleichen bestimmt. Im allgemeinen beträgt der Anteil optisch aktiver Verbindungen mit dichroitischer Farbstoffe höchstens je etwa 10 Gew.-% im Gesamtgemisch.

Die Herstellung der erfindungsgemäßen Gemische und die Herstellung elektrooptischer Vorrichtungen, welche dieses Gemisch als flüssigkristallines Dielektrikum enthalten, können nach an sich bekannten Methoden erfolgen.

Die Erfindung wird durch die folgenden Beispiele weiter veranschaulicht. C bedeutet eine kristalline, S eine smektische, S_{B} eine smektisch B, N eine nematische und I die isotrope Phase. V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,5-fachen Wert von V₁₀. An bezeichnet die optische Anisotropie und nₒ den Brechungsindex bei NaD-Linie, wenn nicht anders angegeben. Δε bezeichnet die dielektrische Anisotropie (Δε = ε_{||}, wobei ε_{||} die Dielektrizitätskonstante parallel zu den Moleküllängsachsen und ε_{┴} die Dielektrizitätskonstante senkrecht dazu bedeutet. Die elektrooptischen Daten wurden in einer TN-Zelle mit einem an die gewünschte optische Verzögerung angepaßten Plattenabstand bei 20 °C gemessen, sofern nicht ausdrücklich etwas anderes angegeben wird. Die optischen Daten wurden bei 20 °C gemessen, sofern nicht ausdrücklich etwas anderes angegeben wird.

### Beispiel 1

Ein Gemisch bestehend aus
13 % 2-p-Cyanphenyl-5-propyl-1,3-dioxan,
13 % 2-p-Cyanphenyl-5-butyl-1,3-dioxan,
9 % 4-Ethyl-4'-cyanbiphenyl,
8 % 4-Butyl-4'-cyanbiphenyl,
6 % p-Ethylbenzoesäure-(p-cyanphenylester),
4 % p-Propylbenzoesäure-(p-cyanphenylester),
11 % trans-4-Butylcyclohexancarbonsäure-(p-chlorphenylester),
9 % trans-4-Hexylcyclohexancarbonsäure-(p-chlorphenylester),
11 % p-(trans-4-Propylcyclohexyl) -benzoesäure-(p-chlorphenylester),
10 % p-(trans-4-Pentylcyclohexyl)-benzoesäure-(p-chlorphenylester),
3 % trans-4-Butylcyclohexancarbonsäure-(p-(trans-4-propylcyclohexyl)-phenylester) und
3 % trans-4-Pentylcyclohexancarbonsäure-(p-(trans-4-propylcyclohexyl) -phenylester)
zeigt eine Viskosität von 25 mPa.s bei 20°, N 74° I, V₁₀ = 1.1 Volt und Δn = 0,14.

### Beispiel 2

Ein Gemisch bestehend aus
13 % 4-Ethyl-4'-cyanbiphenyl,
13 % 4-Propyl-4'-cyanbiphenyl,
9 % 2-p-Cyanphenyl-5-butylpyrimidin,
8 % 2-p-Cyanphenyl-5-pentylpyrimidin,
9 % trans-4-Propylcyclohexancarbonsäure-(p-methoxyphenylester),
7 % trans-4-Propylcyclohexancarbonsäure-(p-ethoxyphenylester),
16 % trans-4-Pentylcyclohexancarbonsäure-(p-chlorphenylester),
14 % trans-4-Hexylcyclohexancarbonsäure-(p-chlorphenylester),
6 % trans-4-(trans-4-Propylcyclohexyl)-cyclohexancarbonsäure-(p-chlorphenylester) und
5 % trans-4-(trans-4-Pentylcyclohexyl)-cyclohexancarbonsäure-(p-chlorphenylester)
zeigt eine Viskosität von 19 mPa.s bei 20°, N 6O° I, V₁₀ = 1,3 Volt und Δn = 0,15.

### Beispiel 3

Ein Gemisch bestehend aus
15 % p-(trans-4-Propylcyclohexyl)-benzonitril,
16 % p-(trans-4-Butylcyclohexyl)-benzonitril,
17 % p-(trans-4-Pentylcyclohexyl)-benzonitril,
10 % 4-Ethyl-4'-cyanbiphenyl,
6 % trans-4-Butylcyclohexancarbonsäure-(p-chlorphenylester),
5 % trans-4-Hexylcyclohexancarbonsäure-(p-chlorphenylester),
7 % trans-1-p-Propylphenyl-4-pentylcyclohexan,
4 % 4,4'-Bis-(trans-4-propylcyclohexyl)-biphenyl,
5 % 4-(trans-4-Pentylcyclohexyl)-4'-(trans-4-propylcyclohexyl)-biphenyl,
5 % 4-(trans-4-Pentylcyclohexyl)-4'-(trans-4-propylcyclohexyl)-2-fluorbiphenyl,
6 % 4,4'-Bis-(trans-4-propylcyclohexyl)-2-fluorbiphenyl und
4 % 4,4'-Bis-(trans-4-pentylcyclohexyl)-2-fluorbiphenyl
zeigt eine Viskosität von 23 mPa.s bei 20°, N 88° I, Δn = 0,136 und V₁₀ = 1,8 Volt.

In einem Supertwistdisplay (240° Twist, high tilt) zeigt dieses Gemisch eine steile Kennlinie bei V₁₀ = 2,0 Volt.

### Beispiel 4

Ein Gemisch bestehend aus
13 % 2-p-Cyanphenyl-5-propyl-1,3-dioxan,
13 % 2-p-Cyanphenyl-5-butyl-1,3-dioxan,
9 % 4-Ethyl-4'-cyanbiphenyl,
8 % 4-Butyl-4'-cyanbiphenyl,
6 % p-Ethylbenzoesäure-(p-cyanphenylester),
4 % p-Propylbenzoesäure-(p-cyanphenylester),
11 % trans-4-Butylcyclohexancarbonsäure-(p-chlorphenylester),
9 % trans-4-Hexylcyclohexancarbonsäure-(p-chlorphenylester),
11 % p-(trans-4-Propylcyclohexyl)-benzoesäure-(p-chlorphenylester),
10 % p-(trans-4-Pentylcyclohexyl)-benzoesäure-(p-chlorphenylester),
3 % trans-4-Butylcyclohexancarbonsäure-(p-(trans-4-propylcyclohexyl)-phenylester) und
3 % trans-4-Pentylcyclohexancarbonsäure-(p-(trans-4-propylcyclohexyl)-phenylester)
zeigt eine Viskosität von 25 mPa.s bei 20°, N 74° I, V₁₀ = 1,1 Volt und Δn = 0,14.

### Beispiel 5

Ein Gemisch bestehend aus
13 % 2-p-Cyanphenyl-5-propyl-1,3-dioxan,
13 % 2-p-Cyanphenyl-5-butyl-1,3-dioxan,
9 % p-(trans-4-Propylcyclohexyl)-benzonitril,
8 % p-(trans-4-Butylcyclohexyl)-benzonitril,
9 % trans-4-Propylcyclohexancarbonsäure-(p-methoxyphenylester),
7 % trans-4-Propylcyclohexancarbonsäure-(p-ethoxyphenylester),
16 % trans-4-Butylcyclohexancarbonsäure-(p-chlorphenylester),
14 % trans-4-Hexylcyclohexancarbonsäure-(p-chlorphenylester),
6 % trans-4-(trans-4-Propylcyclohexyl)-cyclohexancarbonsäure-(p-chlorphenylester) und
5 % trans-4-(trans-4-Pentylcyclohexyl)-cyclohexancarbonsäure-(p-chlorphenylester)
zeigt eine Viskosität von 17 mPa.s bei 20°, N 61° I, V₁₀ = 1,4 Volt und Δn = 0,11.

### Beispiel 6

Ein Gemisch bestehend aus
14 % 2-p-Cyanphenyl-5-propyl-1,3-dioxan,
13 % 2-p-Cyanphenyl-5-butyl-1,3-dioxan,
10 % p-Ethylbenzoesäure-(p-cyanphenylester),
8 % p-Propylbenzoesäure-(p-cyanphenylester),
10 % trans-4-Propylcyclohexancarbonsäure-(p-methoxyphenylester),
8 % trans-4-Propylcyclohexancarbonsäure-(p-ethoxyphenylester),
12 % trans-4-Butylcyclohexancarbonsäure-(p-chlorphenylester),
10 % trans-4-Hexylcyclohexancarbonsäure-(p-chlorphenylester),
5 % trans-4-(trans-4-Propylcyclohexyl)-cyclohexancarbonsäure(p-chlorphenylester),
3 % trans-4-(trans-4-Pentylcyclohexyl)-cyclohexancarbonsäure(p-chlorphenylester),
4 % p-(trans-4-Propylcyclohexyl)-benzoesäure-(p-chlorphenylester) und
3 % p-(trans-4-Pentylcyclohexyl)-benzoesäure-(p-chlorphenylester)
zeigt eine Viskosität von 22 mPa.s bei 20°, N 66° I, V₁₀ = 1,2 Volt und Δn = 0,13.

### Beispiel 7

Ein Gemisch bestehend aus
13 % 2-p-Cyanphenyl-5-propyl-1,3-dioxan,
13 % 2-p-Cyanphenyl-5-butyl-1,3-dioxan,
9 % p-Ethylbenzoesäure-(p-cyanphenylester),
8 % p-Propylbenzoesäure-(p-cyanphenylester),
9 % trans-4-Propylcyclohexancarbonsäure-(p-methoxyphenylester),
7 % trans-4-Propylcyclohexancarbonsäure-(p-ethoxyphenylester),
16 % trans-4-Butylcyclohexancarbonsäure-(p-chlorphenylester),
14 % trans-4-Hexylcyclohexancarbonsäure-(p-chlorphenylester),
6 % trans-4-(trans-4-Propylcyclohexyl)-cyclohexancarbonsäure-(p-chlorphenylester) und
5 % trans-4-(trans-4-Pentylcyclohexyl)-cyclohexancarbonsäure-(p-chlorphenylester),
zeigt eine Viskosität von 18 mPa.s bei 20°, N 63° I, V₁₀ = 1,2 Volt und Δn = 0,12.

### Beispiel 8

Ein Gemisch bestehend aus
4 % p-(trans-4-Heptylcyclohexyl)-benzonitril
5 % 2-p-Cyanphenyl-5-butyl-1,3-dioxan,
4 % 2-p-Cyanphenyl-5-pentyl-1,3-dioxan,
8 % p-Ethylbenzoesäure-(p-cyanphenylester),
6 % p-Propylbenzoesäure-(p-cyanphenylester),
10 % trans-1-p-Ethylphenyl-4-propylcyclohexan,
12 % trans-1-p-Propylphenyl-4-pentylcyclohexan,
6 % p-(trans-4-Propylcyclohexyl)-benzoesäure-(p-chlorphenylester),
6 % p-(trans-4-Pentylcyclohexyl)-benzoesäure-(p-chlorphenylester),
9 % trans-4-(trans-4-Propylcyclohexyl)-cyclohexancarbonsäure-(p-chlorphenylester),
7 % trans-4-(trans-4-Pentylcyclohexyl)-cyclohexancarbonsäure-(p-chlorphenylester),
12 % trans-4-Butylcyclohexancarbonsäure-(p-chlorphenylester) und
11 % trans-4-Hexylcyclohexancarbonsäure-(p-chlorphenylester)
zeigt eine Viskosität von 18 mPa.s bei 20°, N 61° I, V₁₀ = 1,4 Volt und Δn = 0,12.

### Beispiel 9

Ein Gemisch bestehend aus
15 % p-(trans-4-Propylcyclohexyl)-benzonitril,
16 % p-(trans-4-Butylcyclohexyl)-benzonitril,
17 % p-(trans-4-Pentylcyclohexyl)-benzonitril,
10 % 4-Ethyl-4'-cyanbiphenyl,
6 % trans-4-Butylcyclohexancarbonsäure-(p-chlorphenylester),
5 % trans-4-Hexylcyclohexancarbonsäure-(p-chlorphenylester),
7 % trans-1-p-Propylphenyl-4-pentylcyclohexan,
4 % 4,4'-Bis-(trans-4-propylcyclohexyl)-biphenyl,
5 % 4-(trans-4-Pentylcyclohexyl)-4'-(trans-4-propylcyclohexyl)-biphenyl,
5 % 4-(trans-4-Pentylcyclohexyl)-4'-(trans-4-propylcyclohexyl)-2-fluorphenyl,
6 % 4,4'-Bis-(trans-4-propylcyclohexyl)-2-fluorbiphenyl und
4 % 4,4'-Bis-(trans-4-pentylcyclohexyl)-2-fluorbiphenyl
zeigt eine Viskosität von 23 mPa.s bei 20°, N 88° I, Δn = 0,136 und V₁₀ = 1,8 Volt.

In einem Supertwistdisplay (240° Twist, high tilt) zeigt dieses Gemisch eine steile Kennlinie bei V₁₀ = 2,0 Volt.

### Beispiel 10

Ein Gemisch bestehend aus
13 % 2-p-Cyanphenyl-5-propyl-1,3-dioxan,
13 % 2-p-Cyanphenyl-5-butyl-1,3-dioxan,
9 % 4-Ethyl-4'-cyanbiphenyl,
8 % 4-Butyl-4'-cyanbiphenyl,
6 % p-Ethylbenzoesäure-(p-cyanphenylester),
4 % p-Propylbenzoesäure-(p-phenylester),
11 % trans-4-Butylcyclohexancarbonsäure-(p-chlorphenylester),
9 % trans-4-Hexylcyclohexancarbonsäure-(p-chlorphenylester),
11 % p-(trans-4-Propylcyclohexyl)-benzoesäure-(p-chlorphenylester),
10 % p-(trans-4-Pentylcyclohexyl)-benzoesäure-(p-chlorphenylester),
3 % trans-4-Butylcyclohexancarbonsäure-(p-(trans-4-propylcyclohexyl)-phenylester)
   und
3 % trans-4-Pentylcyclohexancarbonsäure-(p-(trans-4-propylcyclohexyl)-phenylester)
zeigt eine Viskosität von 25 mPa.s bei 20°, N 74° I, V₁₀ = 1,1 Volt und Δn = 0,14.

### Beispiel 11

Ein Gemisch bestehend aus
14 % 2-p-Cyanphenyl-5-propyl-1,3-dioxan,
13 % 2-p-Cyanphenyl-5-butyl-1,3-dioxan,
10 % p-Ethylbenzoesäure-(p-cyanphenylester),
8 % p-Propylbenzoesäure-(p-cyanphenylester),
10 % trans-4-Propylcyclohexancarbonsäure-(p-methoxyphenylester),
8 % trans-4-Propylcyclohexancarbonsäure-(p-ethoxyphenylester),
12 % trans-4-Butylcyclohexancarbonsäure-(p-chlorphenylester),
10 % trans-4-Hexylcyclohexancarbonsäure-(p-chlorphenylester),
5 % trans-4-(trans-4-Propylcyclohexyl)-cyclohexancarbonsäure-(p-chlorphenylester),
3 % trans-4-(trans-4-Pentylcyclohexyl)-cyclohexancarbonsäure-(p-chlorphenylester),
4 % p-(trans-4-Propylcyclohexyl)-benzoesäure-(p-chlorphenylester)
   und
3 % p-(trans-4-Pentylcyclohexyl)-benzoesäure-(p-chlorphenylester
zeigt eine Viskosität von 22 mPa.s bei 20°, N 66° I, V₁₀ = 1,2 Volt und Δn = 0,13.

### Beispiel 12

Ein Gemisch bestehend aus
13 % 2-p-Cyanphenyl-5-propyl-1,3-dioxan,
13 % 2-p-Cyanphenyl-5-butyl-1,3-dioxan,
9 % p-Ethylbenzoesäure-(p-cyanphenylester),
8 % p-Propylbenzoesäure-(p-cyanphenylester),
9 % trans-4-Propylcyclohexancarbonsäure-(p-methoxyphenylester),
7 % trans-4-Propylcyclohexancarbonsäure-(p-ethoxyphenylester),
16 % trans-4-Butylcyclohexancarbonsäure-(p-chlorphenylester),
14 % trans-4-Hexylcyclohexancarbonsäure-(p-chlorphenylester),
6 % trans-4-(trans-4-Propylcyclohexyl)-cyclohexancarbonsäure-(p-chlorphenylester)
   und
5 % trans-4-(trans-4-Pentylcyclohexyl)-cyclohexancarbonsäure-(p-chlorphenylester)
zeigt eine Viskosität von 18 mPa.s bei 20°, N 63° I, V₁₀ = 1,2 Volt und Δn = 0,12.

### Beispiel 13

Ein Gemisch bestehend aus
4 % p-(trans-4-Heptylcyclohexyl)-benzonitril,
5 % 2-p-cyanphenyl-5-butyl-1,3-dioxan,
4 % 2-p-cyanphenyl-5-pentyl-1,3-dioxan,
8 % p-Ethylbenzoesäure-(p-cyanphenylester),
6 % p-Propylbenzoesäure-(p-cyanphenylester),
10 % trans-1-p-Ethylphenyl-4-propylcyclohexan,
12 % trans-1-p-Propylphenyl-4-pentylcyclohexan,
6 % p-(trans-4-Propylcyclohexyl)-benzoesäure-(p-chlorphenylester),
6 % p-(trans-4-Pentylcyclohexyl)-benzoesäure-(p-chlorphenylester),
9 % trans-4-(trans-4-Propylcyclohexyl)-cyclohexancarbonsäure-(p-chlorphenylester),
7 % trans-4-(trans-4-Pentylcyclohexyl)-cyclohexancarbonsäure-(p-chlorphenylester),
12 % trans-4-Butylcyclohexancarbonsäure-(p-chlorphenylester)
   und
11 % trans-4-Hexylcyclohexancarbonsäure-(p-chlorphenylester)
zeigt eine Viskosität von 18 mPa.s bei 20°, N 61° I, V₁₀ = 1,4 Volt und Δn = 0,12.

### Beispiel 14

Ein Gemisch bestehend aus
5 % p-Propylbenzoesäure-(3-fluor-4-cyanphenylester),
5 % p-Butylbenzoesäure-(3-fluor-4-cyanphenylester),
7 % p-Pentylbenzoesäure-(3-fluor-4-cyanphenylester),
5 % p-Heptylbenzoesäure-(3-fluor-4-cyanphenylester),
8 % trans-1-p-Ethylphenyl-4-propylcyclohexan,
12 % trans-1-p-Propylphenyl-4-pentylcyclohexan,
9 % trans-4-(trans-4-Propylcyclohexyl)-cyclohexancarbonsäure-(p-chlorphenylester),
8 % trans-4-(trans-4-Pentylcyclohexyl)-cyclohexancarbonsäure-(p-chlorphenylester),
10 % p-(trans-4-Propylcyclohexyl)-benzoesäure-(p-chlorphenylester),
8 % p-(trans-4-Pentylcyclohexyl)-benzoesäure-(p-chlorphenylester),
12 % trans-4-Butylcyclohexancarbonsäure-(p-chlorphenylester)
   und
11 % trans-4-Hexylcyclohexancarbonsäure-(p-chlorphenylester)
zeigt eine Viskosität von 19 mPa.s bei 20°, N 65° I, V₁₀ = 1,2 Volt und Δn = 0,11.

## Patentansprüche

1. Flüssigkristallines Gemisch enthaltend eine oder mehrere Verbindungen der allgemeinen Formel 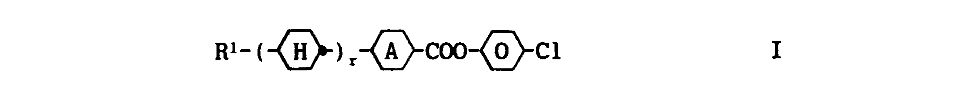
worin R¹ geradkettiges Alkyl mit 2 bis 12 C-Atomen,
worin auch eine C₂-Gruppe durch -0- oder -CH=CH-ersetzt sein kann, Ring A 1,4-Phenylen oder trans-1,4-Cyclohexylen und r 0 oder 1 bedeutet,
und eine oder mehrere stark dielektrisch positive Verbindungen, ausgewählt aus der Gruppe bestehend aus den Verbindungen der allgemeinen Formeln II, III und IV in einem Gewichtsverhältnis der Verbindungen der Formel I zu den Verbindungen der Formeln II, III und IV von 1:10 bis 10:1: 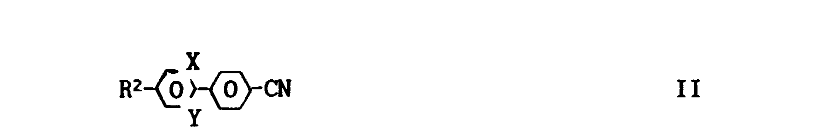 worin R² eine der für R¹ angegebenen Bedeutungen hat und X und Y jeweils unabhängig voneinander CH oder N bedeuten, 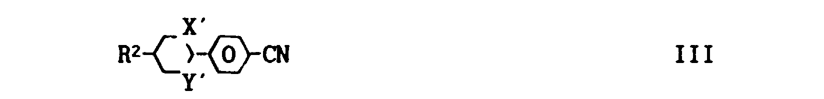 worin R² eine der für R¹ angegebenen Bedeutungen hat und X' und Y' CH₂ oder 0 bedeuten, 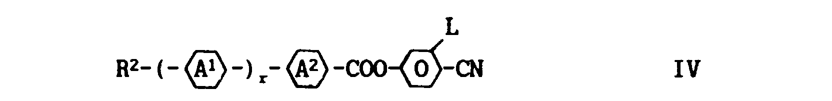 worin R² eine der für R¹ angegebenen Bedeutungen, r die oben angegebene Bedeutung hat, die Ringe A¹ und A² eine der für A angegebenen Bedeutungen haben und L H oder F ist.

2. Flüssigkristallines Gemisch nach Anspruch 1, dadurch gekennzeichnet, daß der Anteil an Verbindungen der Formeln I, II, III und IV zusammen im Gesamtgemisch mindestens 50 Gew.-% beträgt.

3. Flüssigkristallines Gemisch nach Anspruch 1 oder 2, dadurch gekennzeichnet, daß der Anteil an Verbindungen der Formel II, III oder IV im Gesamtgemisch 10 - 40 Gew.-% beträgt.

4. Flüssigkristallines Gemisch nach einem der Ansprüche 1 bis 3, dadurch gekennzeichnet, daß der Anteil an Verbindungen der Formel I im Gesamtgemisch mindestens 15 Gew.-% beträgt.

5. Flüssigkristallines Gemisch nach einem der Ansprüche 1 bis 4, dadurch gekennzeichnet, daß es eine oder mehrere Verbindungen der allgemeinen Formeln la, Ib und/oder lc 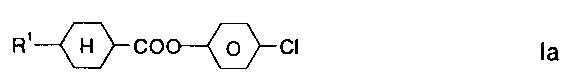 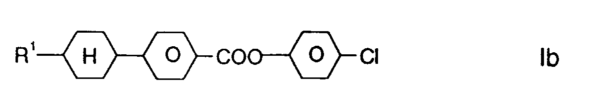 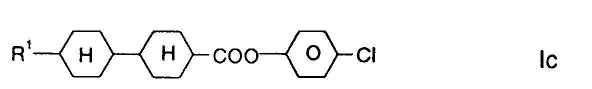 worin R¹ die angegebene Bedeutung hat, in einer Gesamtmenge von mindestens 25 Gew.-% enthält.

6. Flüssigkristallines Gemisch nach einem Ansprüche 1 bis 5, dadurch gekennzeichnet, daß R¹ und R² jeweils n-Alkyl mit 2 bis 7 C-Atomen bedeuten.

7. Verwendung des flüssigkristallinen Gemisches gemäß Anspruch 1 für elektrooptische Zwecke.

## Claims

1. Liquid-crystalline mixture containing one or more compounds of the general formula 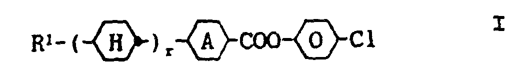
in which R¹ is straight-chain alkyl having 2 to 12 carbon atoms in which, in addition, one CH₂ group may be replaced by -O- or -CH=CH-, the ring A is 1,4-phenylene or trans-1,4-cyclohexylene, and r is 0 or 1,
and one or more highly dielectrically positive compounds selected from the group comprising the compounds of the general formulae II, III and IV in a weight ratio between the compounds of the formula I and the compounds of the formulae II, III and IV of from 1:10 to 10:1: 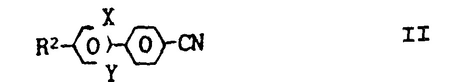
in which R² has one of the meanings indicated for R¹, and X and Y are each, independently of one another, CH or N, 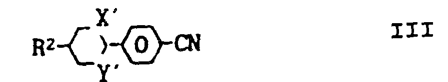
in which R² has one of the meanings indicated for R¹, and X' and Y' are CH₂ or O, 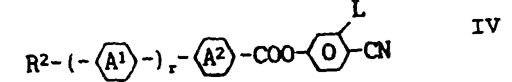
in which R² has one of the meanings indicated for R¹, r is as defined above, the rings A¹ and A² have one of the meanings indicated for A, and L is H or F.

2. Liquid-crystalline mixture according to Claim 1, characterized in that the proportion of compounds of the formulae I, II, III and IV together in the total mixture is at least 50% by weight.

3. Liquid-crystalline mixture according to Claim 1 or 2, characterized in that the proportion of compounds of the formula II, III or IV in the total mixture is 10-40% by weight.

4. Liquid-crystalline mixture according to one of Claims 1 to 3, characterized in that the proportion of compounds of the formula I in the total mixture is at least 15% by weight.

5. Liquid-crystalline mixture according to one of Claims 1 to 4, characterized in that it contains one or more compounds of the general formulae Ia, Ib and/or Ic 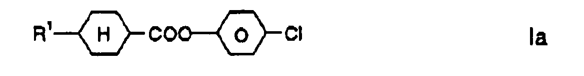 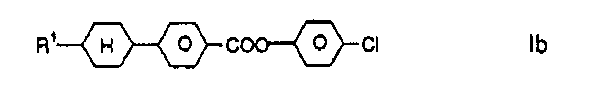 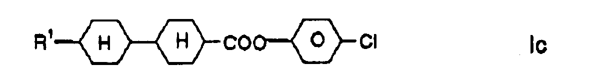 in which R¹ is as defined above, in a total amount of at least 25% by weight.

6. Liquid-crystalline mixture according to one of Claims 1 to 5, characterized in that R¹ and R² are each n-alkyl having 2 to 7 carbon atoms.

7. Use of the liquid-crystalline mixture according to Claim 1 for electrooptical purposes.

## Revendications

1. Mélange de cristaux liquides contenant un ou plusieurs composés de formule générale 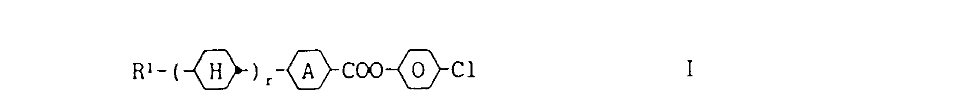
dans laquelle R¹ représente un alkyle à chaîne droite ayant de 2 à 12 atomes de carbone, où également un groupe CH₂ peut être remplacé par -O- ou -CH=CH-, le noyau A représente un 1,4-phénylène ou un trans-1,4-cyclohexylène et r vaut 0 ou 1,
et un ou plusieurs composés fortement diélectriquement positifs, choisis dans le groupe constitué par les composés de formules générales II, III et IV dans un rapport pondéral des composés de formule I aux composés de formules II, III et IV de 1:10 à 10:1 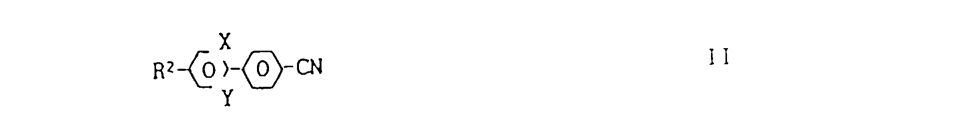
où R² a l'une des significations données pour R¹ et X et Y représentent chacun indépendamment l'un de l'autre CH ou N, 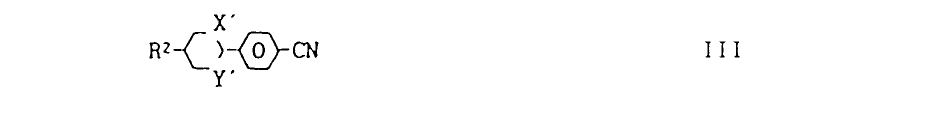
où R² a l'une des significations données pour R¹ et X' et Y' représentent CH₂ ou O, 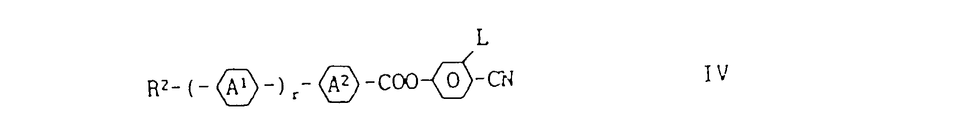
où R² a l'une des significations données pour R¹, r a la signification indiquée ci-dessus, les noyaux A¹ et A² ont l'une des significations données pour A et L représente H ou F.

2. Mélange de cristaux liquides selon la revendication 1, caractérisé en ce que la proportion de composés de formules I, II, III et IV ensemble dans le mélange total s'élève au moins à 50% en poids.

3. Mélange de cristaux liquides selon la revendication 1 ou 2, caractérisé en ce que la proportion de composés de formules II, III ou IV dans le mélange total s'élève à 10-40% en poids.

4. Mélange de cristaux liquides selon l'une des revendications 1 à 3, caractérisé en ce que la proportion de composés de formule I dans le mélange total s'élève à au moins 15% en poids.

5. Mélange de cristaux liquides selon l'une des revendications 1 à 4, caractérisé en ce qu'il contient un ou plusieurs composés de formules générales Ia, Ib et/ou Ic 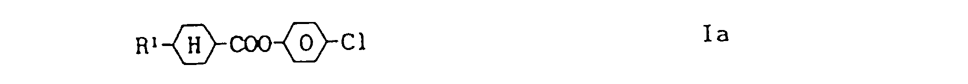 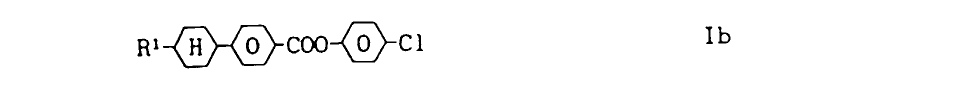 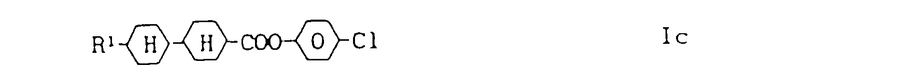 où R¹ a la signification indiquée, en une quantité totale d'au moins 25% en poids.

6. Mélange de cristaux liquides selon l'une des revendications 1 à 5, caractérisé en ce que R¹ et R² représentent chacun un n-alkyle ayant de 2 à 7 atomes de carbone.

7. Utilisation du mélange de cristaux liquides selon la revendication 1 pour des applications électro-optiques.
